# EUROPÄISCHE PATENTSCHRIFT

(11) **EP 1 304 253 B1**
(45) Veröffentlichungstag und Bekanntmachung des Hinweises auf die Patenterteilung: **24.11.2004**
(21) Anmeldenummer: 02018827.2
(22) Anmeldetag: 23.08.2002
(51) Int. Cl.: B60N 2/015, B60N 2/24, B60N 2/005

(54) **Vorrichtung zur Befestigung eines Fahrgastsitzes**
Device for fastening a passenger seat
Dispositif pour la fixation d'un siège de passager

(30) Priorität: 18.10.2001 DE 10150906
(43) Veröffentlichungstag der Anmeldung: 23.04.2003
(73) Patentinhaber: Vogelsitze GmbH, 76228 Karlsruhe (DE)
(72) Erfinder: Bilfinger, Jan, 76228 Karlsruhe (DE)
(74) Vertreter: Dimmerling, Heinz, Dipl.-Ing.

(56) Entgegenhaltungen:
- EP-A- 0 353 684
- DE-A- 19 547 095
- US-A- 4 167 285

## Beschreibung

Die Erfindung betrifft eine Vorrichtung nach dem Oberbegriff des Anspruchs 1, zur Befestigung eines Fahrgastsitzes an der Seitenwand eines Personenbeförderungsfahrzeuges, mit wenigstens einem sich länglich erstreckenden Längsprofil, auf welchem das Sitzteil des Fahrgastsitzes befestigbar ist, und welches an der Seitenwand befestigbar ist, wobei an der Seitenwand ein Halteelement angeordnet ist, welches einen sich von der Seitenwand weg erstreckenden ersten Bereich und einen sich in Richtung zum Fahrzeugboden hin erstreckenden zweiten Bereich hat.

Eine derartige Vorrichtung wie z.B. die EP 0 353 684 A ist im Stand der Technik hinlänglich bekannt. Bei weiteren bekannten Vorrichtungen ist das Tragrohr beziehungsweise sind die Tragrohre auf einer Blechplatte angeordnet, mittels welcher das Tragrohr beziehungsweise die Tragrohre an der Seitenwand des Fahrzeuges befestigt werden. An der Seite, an der die Blechplatte mit der Seitenwand verbunden wird, ist die Blechplatte eben ausgebildet.

Die Blechplatte weist an ihrer der Seitenwand zugewandten Seite Löcher auf, durch welche sich Schrauben erstrecken, welche in unterhalb der Blechplatte verlaufende U-förmige Klauen einschraubbar sind. Mittels der Schrauben können die Klauen in Richtung zur Blechplatte angezogen werden.

An der Seitenwand des Fahrzeuges ist eine L-förmige Schiene angeordnet, welche sich etwa waagerecht aus der Seitenwand erstreckt und an ihrem der Seitenwand abgewandten Ende zum Fahrzeugboden hin abgewinkelt ist.

Zur Befestigung des Fahrgastsitzes an der Seitenwand beziehungsweise zur Befestigung der Blechplatte an der Seitenwand wird die Blechplatte auf den sich waagerecht aus der Seitenwand erstreckenden Teil det Schiene aufgelegt. Hierdurch hintergreift der der Seitenwand zugewandte Schenkel der Klauen das zum Fahrzeugboden hin abgewinkelte Ende der Schiene. Durch Anziehen der Schrauben werden die Klauen fest gegen die Blechplatte gedrückt, wodurch die sich aus der Seitenwand erstreckende Schiene zwischen dem der Seitenwand zugewandten Schenkel der Klaue und der Blechplatte eingeklemmt wird.

Wenngleich eine derartige Befestigung ihren Zweck auch im wesentlichen erfüllt, so hat sie dennoch den Nachteil, daß sie recht aufwendig zu montieren ist. Darüber hinaus sind die Schrauben sehr gut einsehbar, was sich nachteilig auf das Aussehen der Sitzbefestigung auswirkt.

Aus der DE 689 06 753 T2 ist ein Sitzuntergestell für Fahrzeuge des öffentlichen Verkehrs bekannt, bei welchem die Verbindungskräfte, die eine vertikal auf das Ende des den Sitz abstützenden Schenkels einwirkende Kraft erzeugen, in eine vertikale Belastung umgesetzt werden. Das Sitzuntergestell weist im vertikalen Schnitt durch einen zum Boden des Fahrzeuges und gleichzeitig zu dessen Seitenwandung senkrechten Ebene ein Profil auf, das im wesentlichen die Form eines umgekehrten "L" hat. Der horizontale Abschnitt des Untergestells dient als Sitzfläche eines Sitzes. Der vertikale Schenkel stützt sich auf dem Fahrzeugboden ab und steht mit der Seitenwandung in Kontakt.

Der vertikale Schenkel ist dicker als der horizontale Schenkel. Auf seiner Außenseite weist er im unteren Bereich einen Vorsprung auf, welcher in eine in der Seitenwandung ausgebildete Ausnehmung in Eingriff gebracht werden kann.

Es ist Aufgabe der Erfindung, eine eingangs genannte Vorrichtung derart auszubilden, daß sie eine schnelle und sichere Befestigung des Fahrgastsitzes erlaubt, wobei die Befestigungselemente von oben nicht sichtbar sein sollen.

Die Lösung dieser Aufgabe ergibt sich aus den kennzeichnenden Merkmalen des Anspruchs 1. Vorteilhafte Weiterbildungen der Erfindung ergeben sich aus den Unteransprüchen.

Gemäß der Erfindung ist eine Vorrichtung zur Befestigung eines Fahrgastsitzes an der Seitenwand eines Personenbeförderungsfahrzeuges, mit wenigstens einem sich länglich erstreckenden Längsprofil, auf welchem das Sitzteil des Fahrgastsitzes befestigbar ist, und welches an der Seitenwand befestigbar ist, wobei an der Seitenwand ein Halteelement angeordnet ist, welches einen sich von der Seitenwand weg erstreckenden ersten Bereich und einen sich in Richtung zum Fahrzeugboden hin erstreckenden zweiten Bereich hat, dadurch gekennzeichnet, daß das Längsprofil an seinem der Seitenwand zugewandten Ende ein Befestigungselement aufweist, sowie das Halteelement eine Ausnehmung aufweist, welche näher zur Seitenwand und tiefer gelegen ist, als der sich in Richtung des Fahrzeugbodens erstreckende zweite Bereich, und in welche das Befestigungselement teilweise einführbar ist, wobei das Befestigungselement an seiner dem Längsprofil abgewandten Seite wenigstens eine Öffnung aufweist, durch welche sich ein Fixierelement erstreckt, mittels welchem das Befestigungselement abstützbar ist.

Dadurch, daß das Längsprofil an seinem der Seitenwand zugewandten Ende ein Befestigungselement aufweist, sowie das Halteelement eine Ausnehmung aufweist, welche näher zur Seitenwand und tiefer gelegen ist, als der sich in Richtung des Fahrzeugbodens erstreckende zweite Bereich, und in welche das Befestigungselement teilweise einführbar ist, läßt sich das Befestigungselement auf einfache Weise und sicher mit dem Halteelement verbinden. Zur Verbindung mit dem Halteelement braucht das Befestigungselement lediglich in die Ausnehmung eingeführt zu werden. Dadurch, daß das Befestigungselement an seiner dem Längsprofil abgewandten Seite wenigstens eine Öffnung aufweist, durch welche sich ein Fixierelement streckt, mittels welchem das Befestigungselement abstützbar ist, läßt sich das Befestigungselement gegen eine unbeabsichtigte Trennung von dem Halteelement sichem. Das Fixierelement braucht hierzu lediglich soweit durch die Öffnung gebracht werden, daß sich das Befestigungselement derart auf dem Halteelement abstützt, daß es mit Druck gegen eine entsprechende Wandung des Halteelements gepreßt wird. Durch die Klemmung wird ein Verschieben des Befestigungselements verhindert.

Besonders vorteilhaft ist eine Ausführungsform der Erfindung, bei der die Ausnehmung nutförmig ausgebildet ist, und das Befestigungselement an seiner der Seitenwand zugewandten Seite an die Ausnehmung angepaßt ist. Einerseits läßt sich eine nutförmige Ausnehmung auf sehr einfache Weise herstellen, was sich vorteilhaft auf die Herstellungskosten auswirkt, andererseits läßt sich das Befestigungselement auf sehr einfache Weise in eine nutförmige Ausnehmung einbringen. Des weiteren läßt sich das Befestigungselement in einer nutförmigen Ausnehmung auf sehr einfache Weise mittels des Fixierelements festklemmen.

Besonders vorteilhaft ist es, wenn das Fixierelement eine Schraube ist, welche in dem Befestigungselement eingeschraubt ist. Durch die Ausbildung des Fixierelements als Schraube läßt sich auf sehr einfache Weise eine Abstützung und damit ein Festklemmen des Befestigungselements an dem Halteelement erreichen. Die Schraube braucht lediglich soweit in das Befestigungselement eingeschraubt zu werden, bis sie auf das Halteelement stößt, wodurch sich an einer entsprechenden gegenüberliegenden Wandung des Halteelements eine Gegenkraft aufbaut.

Sehr vorteilhaft ist auch eine Ausführungsform der Erfindung, bei der das Halteelement und das Befestigungselement so ausgebildet sind, daß der sich in Richtung zum Fahrzeugboden erstreckende zweite Bereich mittels des Fixierelements hinter greifbar ist. Hierdurch wird nicht nur eine kraftschlüssige, sondern auch eine formschlüssige Verbindung des Befestigungselements mit dem Halteelement erreicht. Die Verbindung des Befestigungselements mit dem Halteelement ist daher besonders sicher.

Besonders vorteilhaft ist auch eine Ausführungsform der Erfindung, bei der das Halteelement und das Befestigungselement so ausgebildet sind, daß das Befestigungselement mittels des Fixierelements auf eine Seitenwand der nutförmigen Ausnehmung pressbar ist.

Durch die erfindungsgemäße Ausbildung der Wandanbindung der Längsprofile 1 wird einerseits eine sehr einfache Montage erreicht. Zum anderen wird zur Herstellung des Halteelements nur sehr wenig Material benötigt, was sich einerseits sehr vorteilhaft auf die Herstellungskosten auswirkt, und andererseits eine Gewichtsreduzierung zur Folge hat.

Besonders vorteilhaft ist auch eine Ausführungsform der Erfindung, bei der die Platte eine Ausnehmung aufweist. Hierdurch wird weiteres Gewicht eingespart, was im Fahrzeugbau sehr wünschenswert ist.

Bei einer weiteren besonderen Ausführungsform der Erfindung sind der sich von der Seitenwand weg erstreckende erste Bereich und der sich in Richtung zum Fahrzeugboden hin erstreckende zweite Bereich des Halteelements als Sichtblende ausgebildet. Dadurch wird die Verbindung des Befestigungselements mit dem Halteelement vollständig abgedeckt, was sich einerseits sehr vorteilhaft auf das Aussehen des Sitzes auswirkt, und sich andererseits sehr vorteilhaft im Hinblick auf eine Verletzungsgefahr beispielsweise durch Einklemmen der Finger an der Verbindung des Befestigungselements mit dem Halteelement auswirkt.

Sehr vorteilhaft ist es, wenn das Halteelement ein Aluminium-Formteil ist. Hierdurch läßt sich das Halteelement preiswert herstellen.

Weitere Einzelheiten der vorliegenden Erfindung ergeben sich aus der nachfolgenden Beschreibung eines besonderen Ausführungsbeispiels unter Bezugnahme auf die Zeichnung.

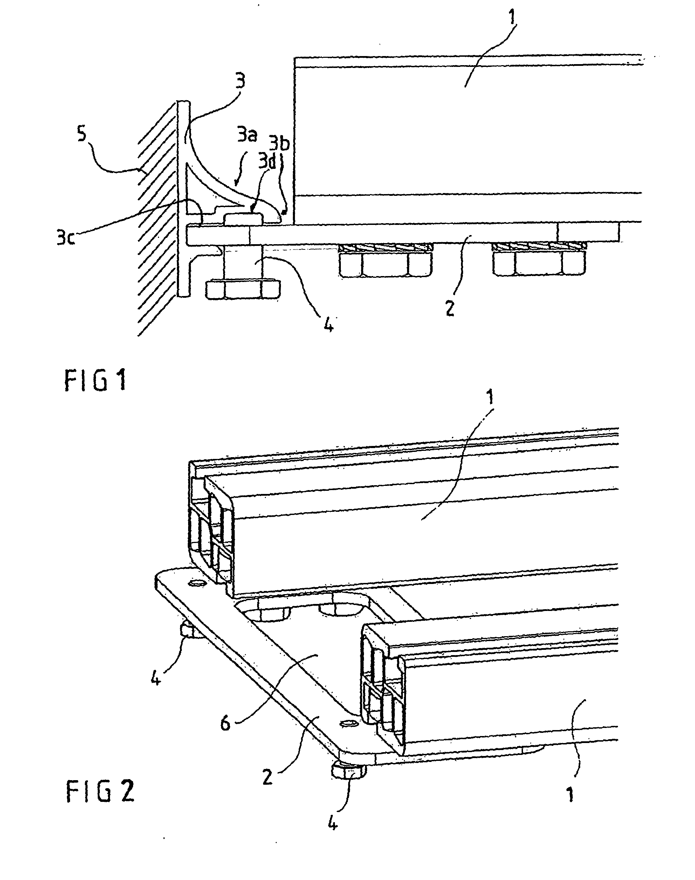

Es zeigt
- Figur 1: eine schematische Darstellung einer erfindungsgemäßen Vorrichtung teilweise im Schnitt quer zur Längsrichtung des Halteelements und der Seitenwand und
- Figur 2: eine aus Befestigungselement, Platte und Längsprofilen bestehende Anordnung in perspektivischer Darstellung.

Wie der Zeichnung entnommen werden kann, sind zwei Längsprofile 1, auf welchen der Sitzteil eines Fahrzeugsitzes befestigbar ist, auf einer Platte 2 befestigt. Die Platte 2 weist in ihrer Mitte eine rechteckförmige Ausnehmung 6 auf, welche einer Gewichtserspamis dient. An ihrer den Längsprofilen 1 abgewandten Seite weist die Platte 2 Gewindebohrungen auf, in welchen Schrauben 4 eingeschraubt sind.

An der Seitenwand 5 eines Personenbeförderungsfahrzeuges ist ein Halteelement 3 angeordnet. Das Halteelement 3 hat einen sich von der Seitenwand 5 wegerstrekkenden ersten Bereich 3a und einen sich in Richtung Fahrzeugboden erstreckenden zweiten Bereich 3b. Der sich in Richtung zum Fahrzeugboden hin erstreckende zweite Bereich 3b ist als Steg ausgebildet, so daß er hintergriffen werden kann.

Das Halteelement 3 weist des weiteren an seiner der Seitenwand 5 des Personenbeförderungsfahrzeuges zugewandten Seite eine nutförmige Ausnehmung 3c auf, deren Nutöffnung sich von der Seitenwand 5 weg in Richtung Längsprofil 1 erstreckt. Die Ausnehmung 3c ist so ausgebildet, daß sich die Platte 2 mit Spiel in sie einstekken läßt.

Durch die stegförmige Ausbildung des sich in Richtung Fahrzeugboden erstreckenden zweiten Bereichs 3b weist das Halteelement 3 eine weitere Ausnehmung 3d auf. Die Schrauben 4 sind derart in der Platte 2 angeordnet, daß sie sich bei in die nutförmige Ausnehmung 3c eingesteckter Platte 2 in die weitere Ausnehmung 3d strecken, wenn sie durch die Platte 2 geschraubt werden. Stoßen die Schrauben 4 auf den Grund der weiteren Ausnehmung 3d an, stützt sich die Platte 2 mittels der Schrauben 4 auf dem Halteelement 3 ab. Durch die Abstützung wird die Platte mit ihrer dem Fahrzeugboden zugewandten Seite auf die dem Fahrzeugboden zugewandten Seite der nutförmigen Ausnehmung 3c gepreßt. Hierdurch besteht eine Klemmverbindung zwischen der Platte 2 und dem Halteelement 3.

Dadurch, daß die Schraube 4 den sich in Richtung zum Fahrzeugboden hin erstrekkenden zweiten Bereich 3 b hintergreift, wird des weiteren auch eine formschlüssige Verbindung der Platte 2 mit dem Halteelement 3 erreicht.

## Patentansprüche

1. Vorrichtung zur Befestigung eines Fahrgastsitzes an der Seitenwand (5) eines Personenbeförderungsfahrzeuges, mit wenigstens einem sich länglich erstreckenden Längsprofil (1), auf welchem das Sitzteil des Fahrgastsitzes befestigbar ist, und welches an der Seitenwand (5) befestigbar ist, wobei an der Seitenwand (5) ein Halteelement (3) angeordnet ist, welches einen sich von der Seitenwand (5) weg erstrekkenden ersten Bereich (3a) und einen sich in Richtung zum Fahrzeugboden hin streckenden zweiten Bereich (3b) hat,
**dadurch gekennzeichnet,**
**daß** das Längsprofil (1) an seinem der Seitenwand (5) zugewandten Ende ein Befestigungselement (2) aufweist, sowie das Halteelement (3) eine Ausnehmung (3c) aufweist, welche näher zur Seitenwand (5) und tiefer gelegen ist, als der sich in Richtung des Fahrzeugbodens erstreckende zweite Bereich (3b), und in welche das Befestigungselement (2) teilweise einführbar ist, wobei das Befestigungselement (2) an seiner dem Längsprofil (1) abgewandten Seite wenigstens eine Öffnung aufweist, durch welche sich ein Fixierelement (4) erstreckt, mittels welchem das Befestigungselement (2) derart abstützbar ist, daß es mit Druck gegen eine entsprechende Wandung der Ausnehmung (3c) des Halteelements gepreßt wird und so ein Verschieben des Befestigungselements aus der Ausnehmung (3c) Verhindert.

2. Vorrichtung nach Anspruch 1,
**dadurch gekennzeichnet,**
**daß** die Ausnehmung (3c) nutförmig ausgebildet ist, und das Befestigungselement (2) an seiner der Seitenwand (5) zugewandten Seite an die Ausnehmung (3c) angepaßt ist.

3. Vorrichtung nach Anspruch 1 oder 2,
**dadurch gekennzeichnet,**
**daß** das Fixierelement (4) eine Schraube ist, welche in dem Befestigungselement (2) eingeschraubt ist.

4. Vorrichtung nach einem der Ansprüche 1 bis 3,
**dadurch gekennzeichnet,**
**daß** das Halteelement (3) und das Befestigungselement (2) so ausgebildet sind, daß der sich in Richtung zum Fahrzeugboden erstreckende zweite Bereich (3b) mittels des Fixierelements (4) hintergreifbar ist.

5. Vorrichtung nach einem der Ansprüche 2 bis 4,
**dadurch gekennzeichnet,**
**daß** das Halteelement (3) und das Befestigungselement (2) so ausgebildet sind, daß das Befestigungselement (2) mittels des Fixierelements (4) auf eine Seitenwand der nutförmigen Ausnehmung (3c) preßbar ist.

6. Vorrichtung nach einem der Ansprüche 3 bis 5,
**dadurch gekennzeichnet,**
**daß** die Platte (2) eine Ausnehmung (6) aufweist.

7. Vorrichtung nach einem der Ansprüche 1 bis 6,
**dadurch gekennzeichnet,**
**daß** sich der von der Seitenwand weg erstreckende erste Bereich (3a) und der sich in Richtung zum Fahrzeugboden hin erstreckende zweite Bereich (3b) des Halteelements (3) als Sichtblende ausgebildet sind.

8. Vorrichtung nach Anspruch 7,
**dadurch gekennzeichnet,**
**daß** das Halteelement (3) ein Aluminium-Formteil ist.

## Claims

1. Device for fastening a passenger seat to the side wall (5) of a passenger transport vehicle having at least one elongated profile (1) extending longitudinally, to which the seat member of the passenger seat may be fastened and which may be attached to the side wall (5), whereby a holding element (3) is arranged on the side wall (5), which has a first region (3a) extending away from the side wall (5) and a second region (3b) extending in the direction towards the vehicle floor, **characterised in that** the elongated profile (1) has a fastening element (2) on its end facing towards the side wall (5), and the holding element (3) has a recess (3c) situated closer to the side wall (5) and lower than the second region (3b) extending in the direction of the vehicle floor, and into which the fastening element (2) may be partially introduced, whereby the fastening element (2) has at least one opening on its side facing away from the elongated profile (1), through which a fixing element (4) extends, by means of which the fastening element (2) may be supported such that it is pressed under force against a suitable wall of the recess (3c) of the holding element and thus prevents displacement of the fastening element out of the recess (3c).

2. Device according to Claim 1, **characterised in that** the recess (3c) is designed groove-shaped and that the fixing element (2) is adapted on its side facing towards the side wall (5) to the recess (3c).

3. Device according to Claim 1 or 2, **characterised in that** the fixing element (4) is a screw which is screwed into the fastening element (2).

4. Device according to one of the claims 1 to 3, **characterised in that** the holding element (3) and the fastening element (2) are designed such that the fixing element (4) may engage behind the second region (3b) extending in the direction of the vehicle floor.

5. Device according to one of the claims 2 to 4, **characterised in that** the holding element (3) and the fastening element (2) are designed such that the fastening element (2) may be pressed by means of the fixing element (4) against a side wall of the groove-shaped recess (3c).

6. Device according to one of the claims 3 to 5, **characterised in that** the plate (2) has a cut-out (6).

7. Device according to one of the claims 1 to 6, **characterised in that** the first region (3a) of the holding element (3) extending away from the side wall and the second region (3b) of the holding element (3) extending in the direction of the vehicle floor are designed as a visual screen.

8. Device according to Claim 7, **characterised in that** the holding element (3) is a moulded aluminium member.

## Revendications

1. Dispositif pour fixer un siège de passager à une paroi latérale (5) d'un véhicule pour le transport de personnes, comprenant au moins un profilé longitudinal (1) allongé sur lequel l'assise du siège de passager peut être fixée, et qui peut être fixé à la paroi latérale (5), sachant qu'un élément de maintien (3) est placé sur la paroi latérale (5), qui présente une première zone (3a) partant de la paroi latérale (5) et une deuxième zone (3b) s'étendant en direction du plancher du véhicule, **caractérisé en ce que** le profilé longitudinal (1) présente à son extrémité tournée vers la paroi latérale (5) un élément de fixation (2), et l'élément de maintien (3) un évidement (3c) qui est situé plus près de la paroi latérale (5) et plus bas que la deuxième zone (3b) s'étendant en direction du plancher du véhicule, et dans lequel l'élément de fixation (2) peut être en partie introduit, sachant que l'élément de fixation (2) est muni sur son côté opposé au profilé longitudinal (1) d'au moins une ouverture à travers laquelle s'étend un élément d'immobilisation (4) pouvant supporter l'élément de fixation (2) de telle sorte qu'il soit pressé contre une paroi correspondante de l'évidement (3c) de l'élément de maintien et empêche ainsi l'élément de fixation de sortir de l'évidement (3c).

2. Dispositif selon la revendication 1, **caractérisé en ce que** l'évidement (3c) est réalisé en forme de rainure, et **en ce que** l'élément de fixation (2) est adapté à l'évidement (3c) sur son côté tourné vers la paroi latérale (5).

3. Dispositif selon la revendication 1 ou 2, **caractérisé en ce que** l'élément d'immobilisation (4) est une vis qui est vissée dans l'élément de fixation (2).

4. Dispositif selon l'une des revendications 1 à 3, **caractérisé en ce que** l'élément de maintien (3) et l'élément de fixation (2) sont réalisés de telle manière que la deuxième zone (3b) s'étendant en direction du plancher du véhicule puisse être saisie par derrière par l'élément d'immobilisation (4).

5. Dispositif selon l'une des revendications 2 à 4, **caractérisé en ce que** l'élément de maintien (3) et l'élément de fixation (2) sont réalisés de telle manière que l'élément de fixation (2) puisse être pressé par l'élément d'immobilisation (4) contre une paroi latérale de l'évidement en forme de rainure (3c).

6. Dispositif selon l'une des revendications 3 à 5, **caractérisé en ce que** la plaque (2) présente un évidement (6).

7. Dispositif selon l'une des revendications 1 à 6, **caractérisé en ce que** la première zone (3a) partant de la paroi latérale et la deuxième zone (3b) de l'élément de maintien (3) s'étendant en direction du plancher du véhicule sont réalisées en tant qu'écran.

8. Dispositif selon la revendication 7, **caractérisé en ce que** l'élément de maintien (3) est une pièce moulée en aluminium.
